# EUROPÄISCHE PATENTSCHRIFT

(11) **EP 0 739 449 B1**
(45) Veröffentlichungstag und Bekanntmachung des Hinweises auf die Patenterteilung: **20.05.1998**
(21) Anmeldenummer: 95935790.6
(22) Anmeldetag: 09.11.1995
(51) Int. Cl.: F04B 35/04, F04B 39/04, H02K 33/02

(54) **VORRICHTUNG ZUM FÜHREN UND ZENTRIEREN EINES MASCHINENELEMENTES**
DEVICE FOR GUIDING AND CENTRING A MACHINE COMPONENT
DISPOSITIF DE GUIDAGE ET DE CENTRAGE D'UN ELEMENT DE MACHINE

(30) Priorität: 14.11.1994 CH 3398/94
(43) Veröffentlichungstag der Anmeldung: 30.10.1996
(73) Patentinhaber: Steiger, Anton, 8308 Illnau (CH)
(72) Erfinder: Steiger, Anton, 8308 Illnau (CH)
(74) Vertreter: Bruderer, Werner
(86) Internationale Anmeldenummer: CH9500258
(87) Internationale Veröffentlichungsnummer: WO9615367

(56) Entgegenhaltungen:
- EP-A- 0 028 144
- GB-A- 2 265 674

## Beschreibung

Die Erfindung betrifft eine Vorrichtung zum Führen und Zentrieren eines Maschinenelementes, welches oszillierende Linearbewegungen in Richtung seiner Zentralachse ausführt, wobei das Maschinenelement an zwei in Richtung der Zentralachse, mit Abstand zueinander angeordneten Führungen, in einem Gehäuse gelagert ist.

Derartige Vorrichtungen zum Führen und Zentrieren eines Maschinenelementes finden unter anderem bei Vibrationskompressoren Verwendung. Aus DE-A1-30 30 711 ist ein Vibrationskompressor bekannt, welcher für Kühlschränke bestimmt ist. Bei diesem bekannten Vibrationskompressor wird über eine Antriebswicklung, welche mit Wechselstrom gespiesen wird, und einen Magneten mit einem magnetischen Pol ein Kolben in translatorische, oszillierende Bewegungen versetzt. Dieser Kolben ist in einer Zylinderbüchse, welche eine Gleitführung bildet, gelagert. Um die bestimmungsgemässe Funktion des Kompressors zu gewährleisten, müssen Antriebswicklung, Kolben und Zylinderbüchse gegenseitig genau auf die Zentralachse ausgerichtet sein, was einen erheblichen konstruktiven Aufwand erfordert. Zudem besteht das Problem der Abdichtung zwischen Kolbenwand und Zylinderbüchsenwand, welches in bekannter Weise durch Kolbenringe, oder mittels einer Spaltdichtung oder anderer bekannter Mittel, gelöst wird. Bei hohen mechanischen Beanspruchungen des Kolbens durch Querkräfte müssen oft noch zusätzliche mechanische Führungen des Kolbens vorgesehen werden, was die Probleme der zentralen Ausrichtung noch verstärkt und hohe Anforderungen an die Herstellgenauigkeit und damit hohe Kosten bedingt, wobei während des Betriebes trotzdem an den Führungs- und Zentriereinrichtungen Abnutzungen auftreten. Ferner bedingt das Auftreten von Gleitreibung die Anwesenheit eines Schmiermittels wie Oel oder Fett. Diese Abnutzungen können den Betrieb des Kompressors erheblich stören, da Materialabrieb, gemischt mit Schmiermittel, in den Kühlmittelkreislauf gelangen kann, oder die Funktionsfähigkeit und die Leistungsfähigkeit des Kompressors erheblich absinkt. Insbesondere bei der Anordnung von Spaltdichtungen sind lange Führungs- und Zentrierungsbereiche notwendig, was zu einem grösseren Materialaufwand und entsprechender konstruktiver Ausgestaltung führt. Je länger die Führungen sind, desto schwieriger wird es jedoch, diese so zu zentrieren, dass zwischen Kolbenwand und Zylinderhülsenwand keine Berührung und Abnutzung stattfindet.

Kolben, welche entlang einer Zentralachse oszillierende Linearbewegungen ausführen, treten auch bei Freikolbenmotoren, z.B. Stirling-Motoren auf. Auch hier werden ähnliche bekannte Lösungen angewendet, wie sie zum bekannten oszillierenden Kompressor erläutert wurden. Dabei treten die gleichen Schwierigkeiten auf, wobei berührungsfreie Dichtflächen zwischen Kolben- und Zylinderwand, wenn überhaupt, nur mit sehr grossem Aufwand und entsprechend hohen Kosten erreicht werden können. Wegen der schwierigen Betriebsbedingungen tritt trotzdem immer wieder Abrieb zwischen sich bewegenden Maschinenelementen auf, wodurch der Betrieb derartiger Freikolbenmotoren stark gestört und die wartungsfreie Lebensdauer erheblich reduziert wird. Für sehr kleine Freikolbenanordnungen in Herzersatzpumpen sind aus der Publikation "Stirling-Engines" G. Walker, Clarendon Press 1980, Seiten 404 und 405, Einrichtungen bekannt, welche den Freikolben mit Hilfe von Federn berührungsfrei in der Zylinderhülse halten sollen. Eine der Lösungen besteht darin, dass bügelförmige Federn an den Aussenenden mit dem Kolben verbunden und im Zentralbereich am Zylinderkopf befestigt sind. Derartige abgewinkelt gebogene Federbügel lassen sich jedoch in der Praxis nicht mit der gewünschten Qualität und Gleichmässigkeit herstellen, welche die gewünschte genaue Führung des Kolbens im Zylinder sicherstellen würde. Insbesondere die Abwinklung der Bügelenden, welche mit dem Kolben verbunden sind, führt zu erheblichen Schwierigkeiten, und in diesem Bereich treten sehr oft Beschädigungen auf. Diese Ausführungsform würde grundsätzlich ein Oszillieren des Kolbens zulassen, vermag jedoch die Anforderungen an die Genauigkeit und Sicherheit der Führung und Zentrierung nicht zu gewährleisten. Als weitere Lösung wird in der gleichen Publikation die Anwendung von Spiralplattenfedern vorgeschlagen. Derartige Spiralplattenfedern sind in Kombination mit zusätzlichen mechanischen Zentrierungen, vereinzelt auch bei grösseren Stirling-Freikolbenmotoren, eingesetzt worden. Derartige Federn weisen jedoch eine zu geringe Quersteifigkeit auf, weshalb in der Praxis die genaue Zentrierung sehr oft nicht gewährleistet ist, sodass immer wieder Schäden und Störungen auftreten. Auch dieser Vorschlag vermag deshalb das Problem der Führung und Zentrierung eines Maschinenelementes in der Form eines Kolbens, welcher oszillierende Linearbewegungen in Richtung der Zentralachse ausführt, nicht in befriedigender Weise zu lösen.

Es ist Aufgabe der vorliegenden Erfindung, eine Vorrichtung zum Führen und Zentrieren eines Maschinenelementes zu schaffen, welche eine oszillierende Linearbewegung in Richtung der Zentralachse zulässt, rechtwinklig zur Zentralachse jedoch eine sehr hohe Steifigkeit aufweist und verhindert, dass das bewegte Maschinenelement von seiner Position auf der Zentralachse abweicht. Die Vorrichtung soll einfach und wartungsfrei aufgebaut sein und in gleichbleibender Präzision und mit gleichbleibenden Kenndaten hergestellt und eingebaut werden können. Die Vorrichtung soll es ermöglichen, linear oszillierend bewegte Maschinenelemente berührungs- und schmiermittelfrei in anderen Maschinenelementen zu führen, z.B. als Kolben-/Zylinder- oder Anker-/Stator-Anordnung bei Linearmotoren.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Bei der erfindungsgemässen Vorrichtung besteht jede der beiden mit Abstand zueinander angeordneten Führungen aus mehreren plattenförmigen Federelementen. Die vorgeschlagene Anordnung der Führungen mit den Federelementen erbringt den Vorteil, dass das Maschinenelement, welches oszillierende Linearbewegungen ausführt, genau auf seiner Zentralachse zentriert und geführt wird. Die Führungen weisen keine Teile auf, welche sich gegeneinander bewegen und Gleitverschleiss unterworfen sind. Das Maschinenelement wird durch die beiden Führungen so geführt und zentriert, dass es gegenüber anderen Maschinenelementen berührungslos eine Relativbewegung ausführen kann. Dies z.B. in einer Kolben-/Zylinder-Anordnung bei einer Pumpe oder einem Linearmotor, oder bei elektrischen Lineargeneratoren mit oszillierender Bewegung. Die Federelemente der einzelnen Führungen sind in einer Ebene angeordnet, welche etwa rechtwinklig zur Zentralachse des oszillierend bewegten Maschinenelementes steht. In dieser Ebene befinden sich die Hauptfederteile, welche plattenförmig ausgebildet sind. Diese Anordnung der Hauptfederteile lässt eine Berechnung der Bewegungs- und Federdaten in bekannter Weise zu, sodass sich auch die Bewegungen des Maschinenelementes genau bestimmen lassen. Im Aussenbereich der langen Hauptfederteile sind kürzere Hilfsfederteile angeordnet, und zwar rechtwinklig zu den Hauptfederteilen, sodass diese Hilfsfederteile etwa parallel zur Zentralachse verlaufen. Die Verbindung der Hilfsfederteile mit den Hauptfederteilen erfolgt über ein zusätzliches Verbindungselement, welches mit entsprechenden Befestigungsmittel zur festen Verbindung der Enden der Haupt- und Hilfsfederteile ausgestattet ist. Durch die Anordnung dieses zusätzlichen Verbindungselementes zwischen jedem Hilfsfederteil und dem zugehörigen Hauptfederteil ergibt sich der Vorteil, dass das Federelement im abgewinkelten Bereich starr ist und die Deformationen der Federelemente nur in den plattenförmigen Bereichen stattfinden. Die einzelnen Hilfsfederteile und Hauptfederteile, sowie die Verbindungselemente, lassen sich entsprechend den technischen Vorgaben sehr genau herstellen, sodass sie beim Einbau sowohl betreffend Masshaltigkeit wie auch Festigkeitswerten die gewünschten Werte aufweisen. Diese genaue Uebereinstimmung mit vorgegebenen Massen und Festigkeitswerten lässt sich mit herkömmlichen Herstellungsmethoden erreichen, da die Federteile und die Verbindungselemente einfache Formen aufweisen. Die einzelnen Bauteile können zudem einfach geprüft und Teile, welche von den Normdaten abweichen, leicht ausgeschieden werden. Das Zusammensetzen jedes Federelementes aus mehreren einzelnen Federteilen ermöglicht eine Anpassung an unterschiedliche Anforderungen und bringt den erheblichen Vorteil mit sich, dass keine Teile der Federelemente bei der Herstellung deformiert, beispielsweise abgebogen werden müssen. Die plattenförmige Gestaltung der einzelnen Federelementteile lässt jederzeit eine genaue Bearbeitung auf die gewünschten Abmessungen, z.B. durch Schleifen zu. Die Haupt- und die Hilfsfederteile sind im Normalfalle ebene Platten.

Die plattenförmigen Federelemente jeder Führung werden zweckmässigerweise zentralsymmetrisch angeordnet, sodass sich von der Zentralachse aus in der Ebene der Führung vier, sechs oder mehr Federelementteile radial nach aussen erstrecken. Ungerade Zahlen von Federelementteilen in der Ebene der Führung sind möglich, zweckmässigerweise umfasst jedes Federelement jedoch ein Hauptfederteil, welches sich symmetrisch beidseits der Zentralachse erstreckt. Dadurch, dass zwischen den Federelementen, welche in einer Ebene liegen, je gleich grosse Winkel eingeschlossen werden, ergibt sich der Vorteil, dass das Maschinenelement auf der Zentralachse genau symmetrisch zentriert wird.

Die Abmessungen der langen Hauptfederteile und der kurzen Hilfsfederteile werden in bekannter Weise so gewählt, dass die Steifigkeit der beiden Führungen, welche die Führungseinrichtung bilden, quer zur Zentralachse mindestens um den Faktor 100 grösser ist als in Richtung der Zentralachse. Abhängig von der gewünschten Führungspräzision und den auftretenden Querkräften werden Führungen mit einem Steifigkeitsverhältnis von 500 und mehr eingesetzt. Bei der erfindungsgemässen Vorrichtung ergeben sich nun weitere Vorteile, indem die Kraftaufnahme, die Steifigkeit oder die Bewegungswege durch Anpassen der einzelnen Federelementteile verändert werden können. Das Steifigkeitsverhältnis lässt sich beispielsweise nicht nur durch Verändern der Abmessungen der plattenförmigen Federteile verändern, sondern auch dadurch, dass mindestens zwei Hilfsfederteile oder Hauptfederteile mit Abstand parallel zueinander angeordnet werden, oder das Hilfs- sowie auch Hauptfederteil so ausgebildet sind. Wird keine Veränderung der Federkonstanten gewünscht, so können in einer Führung in zwei mit Abstand zueinander angeordneten Ebenen zwei Gruppen von plattenförmigen Federelementen angeordnet sein. Dies führt zu einer Erhöhung der Tragfähigkeit der entsprechenden Führung bei etwa gleichbleibendem Steifigkeitsverhältnis. Bei all diesen unterschiedlichen Anordnungen und Ausführungsformen können immer die gleichen Grundelemente von Hauptfederteilen, Hilfsfederteilen und Verbindungselementen verwendet werden, sodass die Berechnungsgrundlagen vereinfacht werden, und auch die Fertigung der Einzelteile erheblich erleichtert wird. Ein weiterer Vorteil besteht darin, dass das Hauptfederteil der einzelnen Federelemente ein- oder zweiteilig ausgebildet sein kann.

Ist die Führung am Ende einer Achse angeordnet, so kann es vorteilhaft sein, die Hauptfederteile einteilig auszubilden, da sie dann mit Hilfe eines zentralen Verbindungselementes mit der Achse verbunden werden können. Wird die Führung jedoch irgendwo im Achsbereich des Maschinenelementes angeordnet, so ist es oft zweckmässig, die Hauptfederteile zweiteilig auszuführen, und dann die gegen die Zentralachse gerichteten inneren Enden der Hauptfederteile durch entsprechende Befestigungseinrichtungen mit der Achse zu verbinden. Neben den erfindungsgemäss vorgeschlagenen Flanschverbindungen mit speziell ausgebildetem Klemmelement sind auch andere bekannte kraftschlüssige Verbindungen einsetzbar.

Besondere Vorteile ergeben sich, wenn das linear oszillierend bewegte Maschinenelement, ein Kolben und/oder eine Kolbenstange eines Freikolbenmotors, z.B. eines Stirling-Motores ist. Mit der erfindungsgemässen Führung ist es möglich, sowohl Arbeits- wie Verdränger-Kolben in deren Zylinder genau zentrisch und berührungsfrei zu führen, sodass Spaltdichtungen mit einer sehr geringen Spaltweite möglich werden. Der Einsatz von zwei identischen Führungen, welche mit Abstand zueinander angeordnet sind, führt die entsprechenden Kolben bzw. die Kolbenstangen bei deren oszillierenden Linearbewegungen genau entlang der Zentralachse, und störende Bewegungsabweichungen werden weitgehend vermieden. Die gewünschten Bewegungswege der oszillierenden Linearbewegung lassen sich durch Anpassen der Abmessungen der Federteile in einem weiten Bereich an die Erfordernisse anpassen. Die gleichen Vorteile stellen sich auch ein, wenn das bewegte Maschinenelement, eine Kolbenstange und/oder ein Kolben eines Kompressors ist, wobei dieser einen Elektroantrieb aufweist, welcher linear oszillierende Bewegungen erzeugt. Dabei sind einfach oder doppelt wirkende Ausführungen möglich.

Nachfolgend wird die Erfindung mit Hilfe von Zeichnungen, welche Ausführungsbeispiele darstellen, näher erläutert. Es zeigen:
- Fig. 1: einen Längsschnitt in schematischer Darstellung durch einen Kolbenkompressor mit linear oszillierendem Elektroantrieb,
- Fig. 2: einen Ausschnitt aus einem Federelement mit dem Verbindungselement zwischen Haupt- und Hilfsfederteil,
- Fig. 3: einen Ausschnitt aus einer Führung mit einer Verdoppelung der Federelemente mit zweiteiligen Hauptfederteilen,
- Fig. 4: die Anordnung gemäss Fig. 3 in einer frontalen Teilansicht,
- Fig. 5: eine schematische Darstellung der Zentralbefestigung eines einteiligen Hauptfederteiles mit Paaren von Hilfsfederteilen, und
- Fig. 6: einen Ausschnitt aus einer Führung mit zweiteiligen Hauptfederteilen und paarweise angeordneten Haupt- und Hilfsfederteilen.

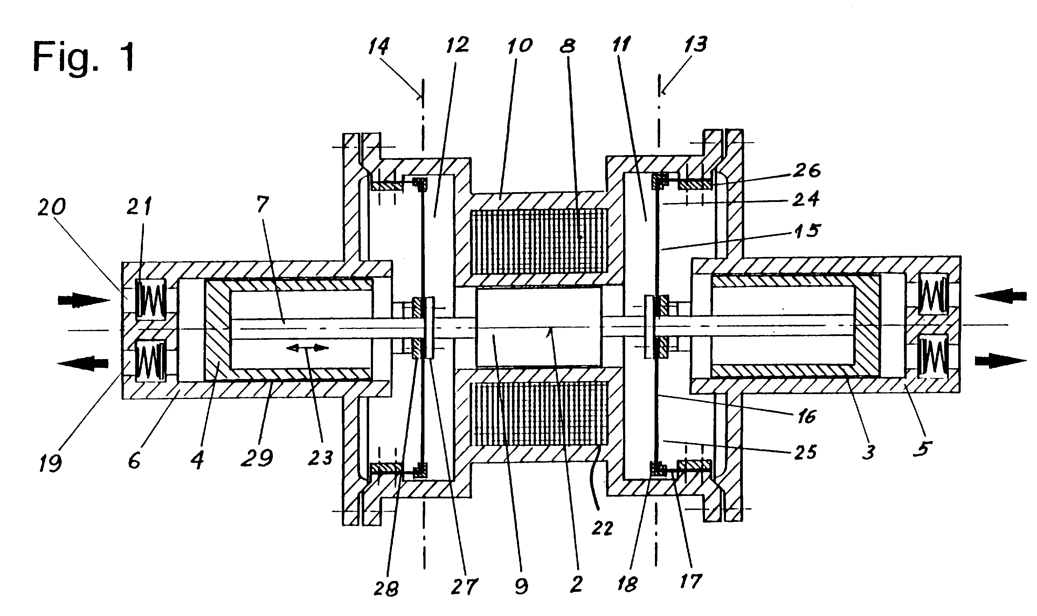

Der in Fig. 1 dargestellte Kompressor 1 verfügt als Boxeranordnung über zwei Kolben 3, 4, welche mit Zylindern 5, 6 zusammenwirken. Diese Zylinder 5, 6 sind Bestandteil eines Gehäuses 10 des Kompressors 1. Die beiden Kolben 3, 4 sind je an den Enden einer Kolbenstange 7 angeordnet, wobei die Kolbenstange 7 und die Kolben 3, 4 eine Zentralachse 2, welche gleichzeitig die Längsachse des Gehäuses 10 bildet, aufweisen. Zwischen den beiden Kolben 3, 4 ist auf der Kolbenstange 7 ein Magnetanker 9 befestigt, welcher von einer Spule 8 umgeben ist. Diese Spule 8 wird über die Leitung 22 mit Wechselstrom gespiesen, wodurch der Magnetanker 9 entlang der Zentralachse 2 in Richtung der Pfeile 23 in oszillierende Linearbewegungen versetzt wird. Ueber die Kolbenstange 7 werden auch die Kolben 3 und 4 in oszillierende Arbeitsbewegungen versetzt. An den Enden der Zylinder 5, 6 sind Druckleitungen 19 und Ansaugleitungen 20 mit Ventilen 21 angeordnet, über welche das Ansaugen und Ausstossen eines Druckmediums gesteuert wird. Die Kolbenstange 7 und damit die Kolben 3 und 4, sowie der Magnetanker 9 sind über Führungen 11, 12 geführt und zentriert. Diese Führungen 11, 12 sind auf zwei Ebenen 13, 14 ausgerichtet, welche etwa rechtwinklig zur Zentralachse 2 stehen. Die beiden Ebenen 13, 14 und damit die beiden Führungen 11, 12 sind in Richtung der Zentralachse 2 mit Abstand zueinander angeordnet, wobei dieser Abstand durch die Lagerbedingungen, sowie die konstruktiven Gegebenheiten des Kompressors bestimmt ist.

Jede der beiden Führungen 11, 12 besteht aus mehreren Federelementen 15. Diese Federelemente 15 bestehen aus einem zweiteiligen langen Hauptfederteil 16 sowie zwei kurzen Hilfsfederteilen 17, welche an den äusseren Enden 24, 25 des Hauptfederteiles 16 starr befestigt und mit dem Gehäuse 10 verbunden sind. Die Hilfsfederteile 17 sind dabei etwa rechtwinklig zum Hauptfederteil 16 angeordnet und verlaufen somit etwa parallel zur Zentralachse 2. Die starre Verbindung zwischen den äusseren Enden 24, 25 des Hauptfederteiles 16 und den Hilfsfederteilen 17 wird mittels Verbindungselementen 18 hergestellt. Die Federelemente 15 sind einerseits über die Hilfsfederteile 17 und die Befestigungselemente 26 fest mit dem Gehäuse 10 und andererseits über die Hauptfederteile 16 sowie einen Flansch 27 und Klemmelemente 28 mit dem oszillierend bewegten Maschinenelement, d.h. der Kolbenstange 7 und den Kolben 3, 4 fest verbunden. Die beiden Führungen 11, 12 sind dabei genau gleich ausgebildet, jedoch wie aus der Figur erkennbar ist, spiegelverkehrt angeordnet.

Mit Hilfe dieser erfindungsgemässen Führungen 11, 12 können die Kolben 3, 4 in den Bohrungen der Zylinder 5, 6 berührungsfrei geführt werden. Die Führung und Zentrierung ist dabei so genau, dass zwischen den Kolben 3, 4 und den Zylindern 5, 6 nur ein sehr dünner Spalt 29 notwendig ist. Dadurch kann die Abdichtung des Kolbenraumes durch berührungslose Spaltdichtungen erfolgen, und es sind keine Dichtungen notwendig und vorhanden, welche durch Relativbewegungen abgerieben, bzw. abgenutzt würden. Das durch die Federelemente 15 jeder Führung 11, 12 gebildete Federsystem wird so ausgestaltet, dass die Steifigkeit in Richtung der Ebenen 13, 14 mindestens um den Faktor 100 grösser ist als dessen Steifigkeit in Richtung der Zentralachse 2. Bei dem in Fig. 1 dargestellten Beispiel ist die Steifigkeit quer zur Zentralachse 2 ca. 200fach höher als in Richtung der Zentralachse 2. Dazu werden Federteile aus gehärtetem Federstahl eingesetzt mit einer Dicke von 1,18 mm. Pro Führung 11, 12 sind zwei Federelemente 15 vorhanden, welche rechtwinklig zueinander angeordnet sind und je aus zwei Hauptfederteilen 16 und zwei Hilfsfederteilen 17 bestehen. Die Hauptfederteile 16 haben eine Länge von ca. 13 cm und die Hilfsfederteile eine Länge von ca. 2,2 cm. Damit wird ein Kolbenhub von 20 mm möglich. Der Kolbendurchmesser beträgt 45 mm und die Oszillationsfrequenz 50 Schwingungen pro Minute.

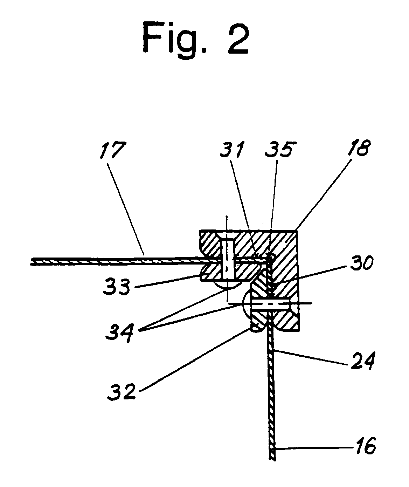

Fig. 2 zeigt den Verbindungsbereich zwischen dem äusseren Ende 24 eines langen Hauptfederteiles 16 und einem kurzen Hilfsfederteil 17 in vergrösserter Darstellung. Das Verbindungselement 18 ist dabei als Winkelelement ausgebildet und weist zwei Positionierflächen 30, 31 auf, welche in einem rechten Winkel zueinander stehen. Diese Positionierflächen 30, 31 dienen als Auflagen für die Endbereiche des Hauptfederteiles 16, sowie des Hilfsfederteiles 17. Im gezeigten Beispiel dient die Positionierfläche 31 gleichzeitig als Anschlagfläche für die äussere Kante 35 des langen Hauptfederteiles 16. Die Aussenkante des Hilfsfederteiles 17 wird ihrerseits gegen die Fläche des Hauptfederteiles gestossen, sodass die Positionen der beiden Federteile 16, 17 innerhalb des Verbindungselementes 18 genau bestimmt sind. Das Hauptfederteil 16 und das Hilfsfederteil 17 sind über das Verbindungselement 18 und entsprechende Klemmeinrichtungen 32, 33 kraftschlüssig miteinander verbunden. Der Kraftschluss wird im gezeigten Beispiel durch Nieten 34 erzeugt, wobei diese Verbindung auch durch eine Schraubenverbindung ersetzt werden kann. Die Uebergangsbereiche vom Einspannbereich in den freien Bereich der Federteile 16, 17 sind in bekannter Weise so ausgebildet, dass keine Beschädigungen der Federelemente auftreten, z.B. durch Abrunden der Kanten oder geeignete Beschichtungen der Klemmplatten 32, 33, bzw. des Verbindungselementes 18.

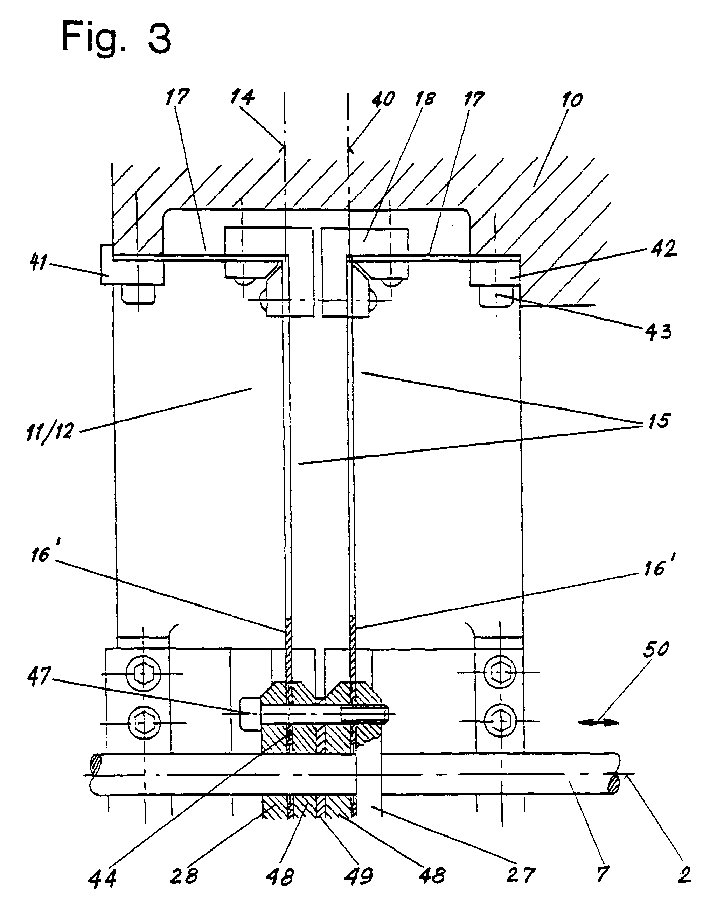

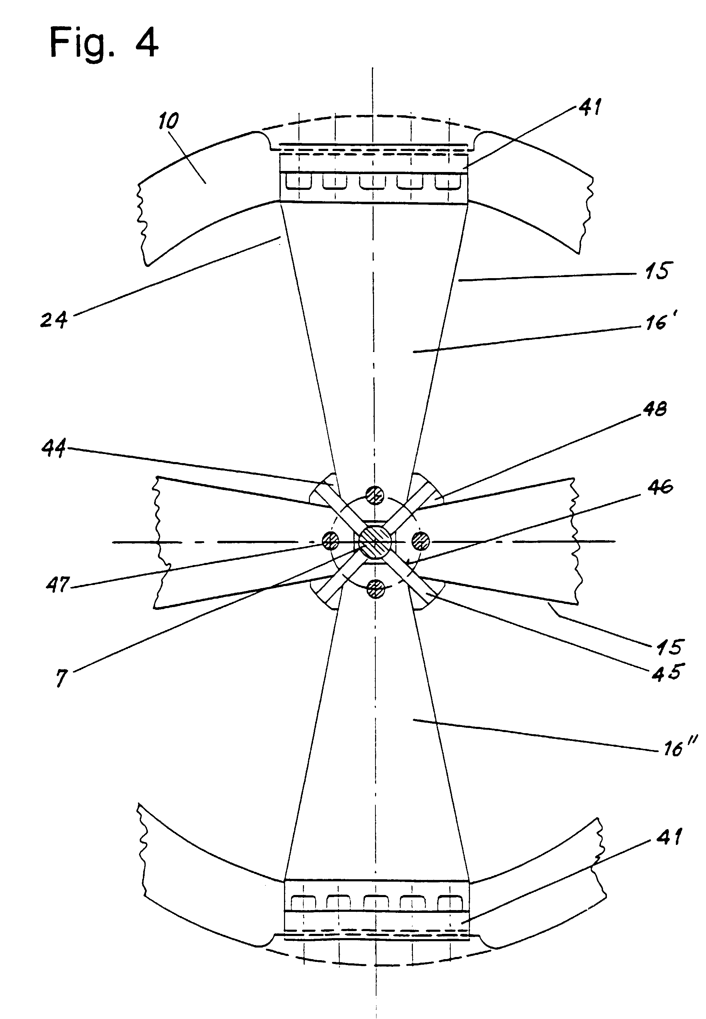

Die Figuren 3 und 4 zeigen eine Führung 11 bzw. 12, welche prinzipiell den Anordnungen gemäss Fig. 1 und 2 entspricht. Es sind jedoch an jeder Führung zwei mit Abstand zueinander angeordnete Ebenen 14, 40 vorhanden, in welchen die langen Hauptfederelemente 16', 16" der Federelemente 15 angeordnet sind. Die beiden Ebenen 14, 40 verlaufen dabei parallel zueinander und etwa rechtwinklig zur Zentralachse 2 der Kolbenstange 7. Aus Fig. 4 ist ersichtlich, dass in jeder der Ebenen 14, 40 zwei Federelemente 15 angeordnet sind, welche rechtwinklig zueinander stehen, und bei welchen zwischen den Hauptfederteilen 16 je gleiche Winkel eingeschlossen sind. Jedes der Federelemente 15 besteht dabei aus zwei Hauptfederteilen 16', 16", zwei Hilfsfederteilen 17 und zwei Verbindungselementen 18. Die von den Verbindungselementen 18 abgewendeten Enden der kurzen Hilfsfederteile 17 sind mittels Befestigungselementen 41, 42 und Schrauben 43 am Gehäuse 10 der Maschine starr befestigt. Die Kolbenstange 7, welche Teil des linear und oszillierend bewegten Maschinenelementes ist, weist auch hier einen Flansch 27 auf, sowie ein Klemmelement 28, welches zur Verbindung der inneren Enden 44 der Hauptfederteile 16', 16" mit dem Flansch 27 dient. Die kurzen Hilfsfederteile 17 sind aus flachen, rechteckigen Platten gebildet. Die Hauptfederteile 16 sind trapezförmig und gegen das äussere Ende 24 breiter ausgebildet als am inneren Ende 44. Die Form der Federteile 16, 17 wird in bekannter Weise durch die gewünschten Federcharakteristiken bestimmt. An den Zentrierplatten 48 sind Rippen 45 angeordnet, welche Anschlagflächen 46 für die inneren Enden 44 der Hauptfederteile 16', 16" bilden. Durch diese Rippen 45 und die entsprechenden Anschlagflächen 46, sowie die entsprechende Formgestaltung der inneren Enden 44 der Hauptfederteile 16, ist deren Position gegenüber den Zentrierplatten 48 bzw. der Kolbenstange 7 genau bestimmt. In dieser Position werden die inneren Enden 44 der Hauptfederteile 16 mit Hilfe der zwei Zentrierplatten 48, dem Klemmelement 28, sowie einer Distanzscheibe 49 und von Schrauben 47 eingespannt und festgehalten. Diese in Fig. 3 und 4 dargestellte Anordnung einer Führung 11 bzw. 12 kann grössere Längs- und Querkräfte aufnehmen, lässt im übrigen aber die gleichen Bewegungsabläufe zu, wie sie zu Fig. 1 beschrieben werden. Insbesondere ist die Freiheit der linear oszillierenden Bewegung der Kolbenstange 7 und des zugehörigen Maschinenelementes in Richtung der Pfeile 50 gewährleistet. Diese Ausführungsform der zweiteiligen Hauptfederteile 16 ist insbesondere dort zweckmässig, wo auf der Zentralachse 2 vor und hinter den Führungen 11 bzw. 12 weitere Maschinenelemente angeordnet sind, welche ein Aufstecken von durchgehenden Federelementen 15 auf die Kolbenstange 7 nicht zulassen. Im weitern wird aber auch die Herstellung der Hauptfederteile 16 erleichtert, da sie geringere Abmessungen aufweisen, und bei Bedarf auch einzelne Teile eines Federelementes 15 auswechselbar sind.

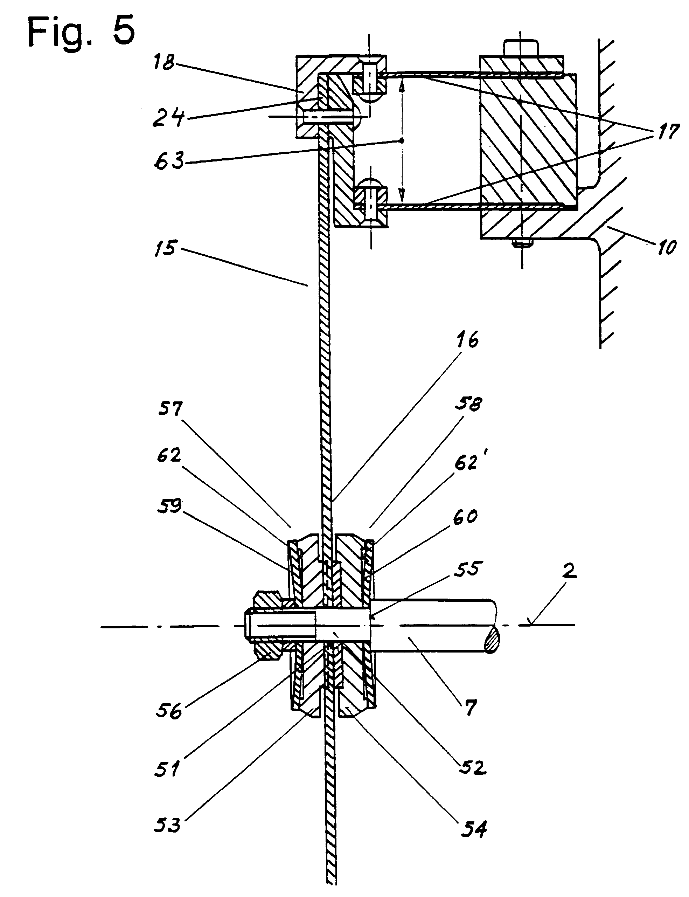

Fig. 5 zeigt eine Führung, bei welcher das oszillierend bewegte Maschinenelement bzw. die Kolbenstange 7 am Ende gelagert und geführt ist. Die Führung besteht dabei aus zwei Federelementen 15, welche rechtwinklig zueinander und wiederum in einer Ebene rechtwinklig zur Zentralachse 2 angeordnet sind. Jedes der Federelemente 15 besteht aus einem durchgehenden Hauptfederteil 16, welches die Zentralachse 2 radial schneidet. An den äusseren Enden 24 der Hauptfederteile 16 sind wiederum Verbindungselemente 18 angeordnet, wobei diese jedoch in dem in Fig. 5 dargestellten Beispiel Auflage- und Positionierflächen für zwei parallel verlaufende, kurze Hilfsfederteile 17 aufweisen. Dementsprechend sind auch am Gehäuse 10 zwei Auflageflächen für die mit Abstand zueinander angeordneten beiden Hilfsfederteile 17 vorhanden, und die Enden sind wiederum mit Hilfe von Spannelementen fest mit dem Gehäuse 10 verbunden. Die Verbindung zwischen den Hilfsfederteilen 17 und dem Hauptfederteil 16 erfolgt sinngemäss, jedoch angepasst, in der zu Fig. 2 beschriebenen Art und Weise, sodass im Uebergangsbereich zwischen den Hilfsfederteilen 17 und dem Hauptfederteil 16 eine starre Verbindung entsteht. Im zentralen Bereich weist jedes der Hauptfederteile 16 eine Bohrung 51 auf, welche auf den Endzapfen 52 der Kolbenstange 7 formschlüssig passt. Beidseits der beiden Hauptfederteile 16 sind Klemmelemente 53, 54 vorhanden, welche scheibenförmig ausgebildet sind. Zur Positionierung ist an der Kolbenstange 7 ein Anschlagflansch 55 ausgebildet, und der Endzapfen 52 weist eine Verschraubung 56 auf, mit welcher die Klemmelemente 53, 54 und die Hauptfederteile 16 eingespannt und festgeklemmt werden können. Bei dieser Art der Verbindung der Hauptfederteile 16 mit dem oszillierend bewegten Maschinenteil, in diesem Falle der Kolbenstange 7, muss sichergestellt werden, dass die Hauptfederteile im Austrittsbereich aus den Halterungen der Klemmelemente 53, 54 mit dem grössten Anpressdruck gehalten werden. Dazu werden die von den Hauptfederteilen 16 abgewendeten Seiten 57, 58 der Klemmelemente 53, 54 mit zentralen Vertiefungen 62, 62' versehen und an diesen Seiten 57, 58 anschliessend zusätzliche Spannscheiben 59, 60 angeordnet. Dadurch wird die von der Verschraubung 56 erzeugte Spannkraft durch elastische Verformung der Spannscheiben 59, 60 auf die Aussenbereiche der Klemmelemente 53, 54 gelenkt, und damit werden auch die Hauptfederteile 16 in diesen Aussenbereichen einwandfrei verspannt.

Die in Fig. 5 dargestellte Anordnung von parallelen Hilfsfederteilen 17 ermöglicht eine massgebliche Erhöhung der Quersteifigkeit, die insbesondere durch eine Vergrösserung des Abstandes 63 zwischen den Federteilen 17 positiv beeinflusst werden kann. Die Anordnung von einem Hilfsfederteil 17 gemäss Fig. 1 bzw. 2 stellt die einfachste Ausführungsform dar.

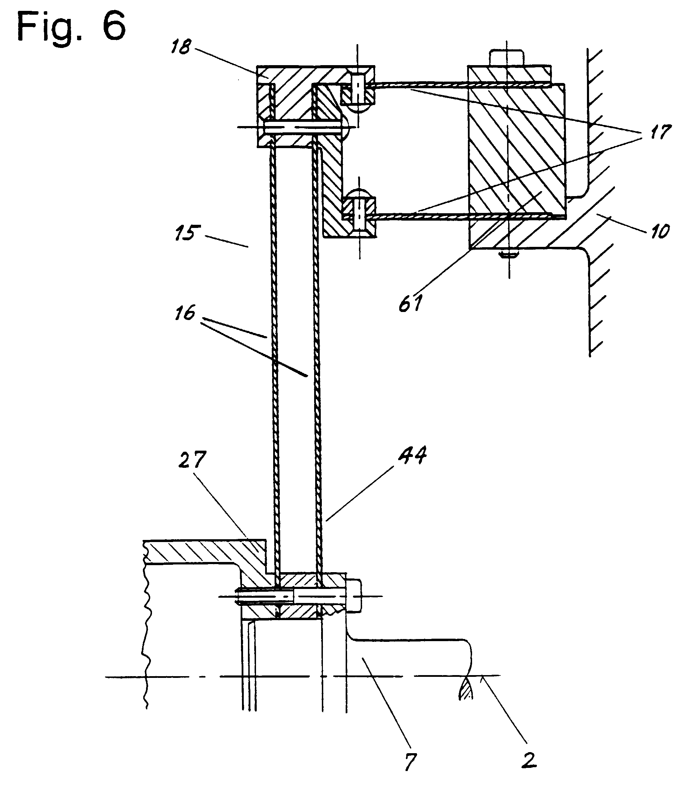

In Fig. 6 ist eine weitere Ausführungsform einer erfindungsgemässen Führung dargestellt, wobei in jedem Federelement 15 sowohl die Hauptfederteile 16, wie auch die Hilfsfederteile 17 paarweise parallel und mit Abstand zueinander angeordnet sind. Die Verbindung der inneren Enden 44 der Hauptfederteile 16 mit dem Flansch 27 der Kolbenstange 7 erfolgt in gleicher Weise, wie zu Fig. 3 und 4 beschrieben. Das Verbindungselement 18 zwischen den äusseren Enden der Hauptfederteile 16 und den daran anstossenden Enden der Hilfsfederteile 17 ist entsprechend ausgebildet und weist Auflageflächen für die paarweise Anordnung der Parallelfedern auf. Zur Verbindung der Hilfsfederteile 17 mit dem Gehäuse 10 sind entsprechende Befestigungs- und Spannelemente 61 vorhanden. Die Ausgestaltung der Führung mit Parallelfedern 16 führt zu einer in beiden Längs-Bewegungsrichtungen symmetrischen Federcharakteristik mit entsprechend günstigerem Spannungsverlauf. Die einfache Feder weist wegen der Biege- und Kraftverhältnisse in den Einspannbereichen bei der Vorwärts- oder Rückwärtsbewegung des Maschinenelementes nicht die gleiche Federcharakteristik auf. Im Verhältnis zum Nullpunkt sind die positive und die negative Charakteristik der Einfachfeder nicht symmetrisch.

Sowohl bei der Ausführungsform gemäss Fig. 1, wie auch bei Ausführungsformen gemäss Fig. 3 und 4 erweist es sich als zweckmässig, in jeder der Ebenen 13, 14 bzw. 40 mindstens zwei Federelemente 15 anzuordnen, welche zur Zentralachse 2 zentralsymmetrisch ausgebildet sind und sich in einem Winkel von 90° kreuzen. Sofern die Konstruktionsbedingungen und die auftretenden Kräfte dies erfordern, können die Federelemente jedoch auch in einem Winkel von 60 oder 45° zueinander angeordnet sein. Dementsprechend werden dann im Bereiche des oszillierend bewegten Maschinenelementes 7 und am Gehäuse 10 mehr Befestigungs- und Positionierpunkte vorgesehen. Unabhängig von den verschiedenen möglichen Ausgestaltungen der Führungen gewährleisten diese eine genaue Zentrierung des linear oszillierend bewegten Maschinenelementes 3, 4, 7 entlang der Zentralachse 2 und eine Reduktion der Abweichungen von dieser Zentralachse 2 als Folge von Querkräften, welche minimale Spalte zwischen den bewegten Maschinenteilen und damit berührungslose Spaltdichtungen zulässt.

## Patentansprüche

1. Vorrichtung zum Führen und Zentrieren eines Maschinenelementes (4, 7), welches oszillierende Linearbewegungen in Richtung seiner Zentralachse (2) ausführt, wobei das Maschinenelement (4, 7) an zwei in Richtung der Zentralachse (2) mit Abstand zueinander angeordneten Führungen (11, 12) in einem Gehäuse (10) gelagert ist, dadurch gekennzeichnet, dass jede der beiden Führungen (11, 12) aus mehreren plattenförmigen Federelementen (15) besteht, welche in einer zur Zentralachse (2) des Maschinenelementes (4, 7) etwa rechtwinklig verlaufenden Ebene (13, 14) angeordnet sind, jedes der Federelemente (15) einerseits im Bereiche der Zentralachse (2) mit dem Maschinenelement (4, 7) und andererseits im Bereiche der äusseren Enden der Federelemente (15) mit dem Gehäuse (10) fest verbunden ist, jedes der Federelemente (15) mindestens einen langen Hauptfederteil (16), welcher in der Ebene (13, 14) rechtwinklig zur Zentralachse (2) liegt und an jedem gegen das Gehäuse (10) gerichteten Ende mindestens einen kurzen Hilfsfederteil (17), welcher etwa parallel zur Zentralachse (2) angeordnet ist aufweist, zwischen jedem Hilfsfederteil (17) und dem zugehörigen Hauptfederteil (16) ein Verbindungselement (18) angeordnet ist, und die Hilfsfederteile (17) über diese Verbindungselemente (18) starr mit den äusseren Enden (24, 25) der Hauptfederteile (16) verbunden sind.

2. Vorrichtung nach Patentanspruch 1, dadurch gekennzeichnet, dass jede der beiden Führungen (11, 12) mindestens zwei zentralsymmetrische Federelemente (15) umfasst, welche in einer Ebene (13, 14) rechtwinklig zur Zentralachse (2) des Maschinenelementes (3, 4, 7) angeordnet sind, und diese Zentralachse (2) radial schneiden, wobei zwischen den Federelementen (15) je gleich grosse Winkel eingeschlossen sind.

3. Vorrichtung nach Patentanspruch 1 oder 2, dadurch gekennzeichnet, dass die Steifigkeit der durch die beiden Führungen (11, 12) gebildeten Führungseinrichtung quer zur Zentralachse (2) mindestens um den Faktor 100 grösser ist als in Richtung der Zentralachse (2).

4. Vorrichtung nach einem der Patentansprüche 1 bis 3, dadurch gekennzeichnet, dass mindestens eine der Führungen (11, 12) zwei Ebenen (14, 40) mit Federelementen (15) aufweist, wobei diese Ebenen (14, 40) parallel und in Richtung der Zentralachse (2) mit Abstand zueinander sowie rechtwinklig zur Zentralachse (2) verlaufen.

5. Vorrichtung nach einem der Patentansprüche 1 bis 4, dadurch gekennzeichnet, dass jedes Federelement (15) aus einem einstückigen Hauptfederteil (16) mit zentralen Verbindungselementen (51) zum Maschinenelement (7, 52) und je mindestens einem an den beiden Enden des Hauptfederteiles (16) angeordneten Hilfsfederteil (17) besteht.

6. Vorrichtung nach einem der Patentansprüche 1 bis 4, dadurch gekennzeichnet, dass jedes Federelement (15) aus einem zweistückigen Hauptfederteil (16) besteht, wobei die gegen die Zentralachse gerichteten inneren Enden (44) der beiden Hauptfederteile (16', 16") fest mit dem Maschinenelement (7, 27) verbunden und an jedem der äusseren Enden (24) der beiden Hauptfederteile (16) mindestens ein Hilfsfederteil (17) angeordnet ist.

7. Vorrichtung nach einem der Patentansprüche 1 bis 4, dadurch gekennzeichnet, dass jedes der Federelemente (15) aus einem ein oder mehrstückigen Hauptfederteil (16) und je zwei Paaren von parallel verlaufenden Hilfsfederteilen (17) besteht.

8. Vorrichtung nach einem der Patentansprüche 1 bis 4, dadurch gekennzeichnet, dass jedes der Federelemente (15) aus einem Paar von parallel angeordneten, ein oder mehrstückigen Hauptfederteilen (16) und je zwei Paaren von parallel verlaufenden Hilfsfederteilen (17) besteht.

9. Vorrichtung nach einem der Patentansprüche 1 bis 8, dadurch gekennzeichnet, dass das zwischen dem Hauptfederteil (16) und jedem Hilfsfederteil (17) der Federelemente (15) angeordnete Verbindungselement (18) ein Winkelelement ist und dieses Winkelelement Positionierflächen (30, 31) und Klemmeinrichtungen (32, 33) für die kraftschlüssige Halterung je eines der Endbereiche der Haupt- und Hilfsfederteile (16, 17) aufweist.

10. Vorrichtung nach Patentanspruch 9, dadurch gekennzeichnet, dass das Winkelelement ein Positionierteil (36) mit rechtwinklig zueinander angeordneten Auflage- und Anschlagflächen (30, 31) sowie Anpressplatten (32, 33) umfasst, die Endbereiche der Haupt- und Hilfsfederteile (16, 17) zwischen je einer Anpressplatte (32, 33) und einer Auflagefläche (30, 31) am Positionierteil (36) eingelegt sind und zur kraftschlüssigen Halterung der Endbereiche der Federteile (16, 17) zwischen dem Positionierteil (36) und den Anpressplatten (32, 33) Schrauben oder Nieten (34) vorhanden sind.

11. Vorrichtung nach einem der Patentansprüche 1 bis 10, dadurch gekennzeichnet, dass die Bereiche (44) der Hauptfederteile (16) der Federelemente (15), welche im Bereiche des Maschinenelementes (7) angeordnet sind, an einem mit dem Maschinenelement (7) verbundenen Flansch (27) festgehalten sind, wobei der Flansch (27) Auflageflächen und Anschlagflächen (45) für diese Bereiche (44) der Hauptfederteile (16) aufweist und diese Bereiche (44) zwischen Klemmelementen (48) und dem Flansch (27) mit Hilfe von Schrauben (47) gehalten sind.

12. Vorrichtung nach Patentanspruch 5, dadurch gekennzeichnet, dass die Hauptfederteile (16) im Bereiche der Zentralachse (2) zwischen Klemmelementen (53, 54) angeordnet sind, diese Klemmelemente (53, 54) auf der von den Hauptfederteilen (16) abgewendeten Seite (57, 58) eine zentrale Vertiefung aufweisen, an diesen Seiten ebene Spannscheiben (59, 60) aufliegen, und diese Spannscheiben (59, 60) durch eine zentrale Verschraubung (56) des Maschinenelementes elastisch durchgebogen werden.

13. Vorrichtung nach einem der Patentansprüche 1 bis 12, dadurch gekennzeichnet, dass an einem Stirling-Freikolbenmotor mindestens einer der Kolben und/oder eine der Kolbenstangen ein derartiges linear oszillierend bewegtes Maschinenelement bildet, und die beiden zugehörigen Führungen im Gehäuse dieses Stirling-Freikolbenmotores abgestützt sind.

14. Vorrichtung nach einem der Patentansprüche 1 bis 12, dadurch gekennzeichnet, dass das linear oszillierend bewegte Maschinenelement eine Kolbenstange (7) und/oder ein Kolben (3, 4) eines Kompressors (1) mit linear oszillierendem Antrieb (8, 9) ist, und die beiden Führungen (11, 12) im Gehäuse (10) dieses Kompressors (1) abgestützt sind.

## Claims

1. Device for guiding and centring a machine component (4, 7) which executes oscillating linear motions in the direction of its central axis (2), the machine component (4, 7) being supported in a housing (10) against two guides (11, 12) spaced apart in the direction of the central axis (2) from one another, characterized in that each of the two guides (11, 12) comprises a plurality of plate-like spring elements (15) disposed in a plane (13, 14) extending substantially at right angles to the central axis (2) of the machine component (4, 7), each of the spring elements (15) is firmly connected on the one hand in the region of the central axis (2) to the machine component (4, 7) and on the other hand in the region of the outer ends of the spring elements (15) to the housing (10), each of the spring elements (15) comprises at least one long main spring part (16), which lies in the plane (13, 14) at right angles to the central axis (2), and at each end directed towards the housing (10) at least one short auxiliary spring part (17) disposed substantially parallel to the central axis (2), a connecting element (18) is disposed between each auxiliary spring part (17) and the associated main spring part (16), and the auxiliary spring parts (17) are connected by said connecting elements (18) rigidly to the outer ends (24, 25) of the main spring parts (16).

2. Device according to claim 1, characterized in that each of the two guides (11, 12) comprises at least two centrosymmetric spring elements (15), which are disposed in a plane (13, 14) at right angles to the central axis (2) of the machine component (3, 4, 7) and radially cut said central axis (2), angles which are each of equal size being defined between the spring elements (15).

3. Device according to claim 1 or 2, characterized in that the stiffness of the guide device formed by the two guides (11, 12) is greater at least by the factor 100 at right angles to the central axis (2) than in the direction of the central axis (2).

4. Device according to one of claims 1 to 3, characterized in that at least one of the guides (11, 12) has two planes (14, 40) with spring elements (15), said planes (14, 40) extending parallel to one another and being spaced apart in the direction of the central axis (2) from one another as well as extending at right angles to the central axis (2).

5. Device according to one of claims 1 to 4, characterized in that each spring element (15) comprises a one-piece main spring part (16) with central connecting elements (51) to the machine component (7, 52) and at least one auxiliary spring part (17) disposed at each of the two ends of the main spring part (16).

6. Device according to one of claims 1 to 4, characterized in that each spring element (15) comprises a two-piece main spring part (16), the inner ends (44) of the two main spring parts (16', 16") directed towards the central axis being firmly connected to the machine component (7, 27) and at least one auxiliary spring part (17) being disposed at each of the outer ends (24) of the two main spring parts (16).

7. Device according to one of claims 1 to 4, characterized in that each of the spring elements (15) comprises a one- or multi-piece main spring part (16) and two pairs each of parallel extending auxiliary spring parts (17).

8. Device according to one of claims 1 to 4, characterized in that each of the spring elements (15) comprises a pair of parallel, one- or multi-piece main spring parts (16) and two pairs each of parallel extending auxiliary spring parts (17).

9. Device according to one of claims 1 to 8, characterized in that the connecting element (18), which is disposed between the main spring part (16) and each auxiliary spring part (17) of the spring elements (15), is an angle element and said angle element has positioning surfaces (30, 31) and clamping devices (32, 33) for the frictionally engaged mounting of, in each case, one of the end regions of the main and auxiliary spring parts (16, 17).

10. Device according to claim 9, characterized in that the angle element comprises a positioning part (36) having support and stop faces (30, 31), which are disposed at right angles to one another, and having contact pressure plates (32, 33), the end regions of the main and auxiliary spring parts (16, 17) are inserted in each case between a contact pressure plate (32, 33) and a support face (30, 31) of the positioning part (36) and screws or rivets (34) are provided for the frictionally engaged mounting of the end regions of the spring parts (16, 17) between the positioning part (36) and the contact pressure plates (32, 33).

11. Device according to one of claims 1 to 10, characterized in that the regions (44) of the main spring parts (16) of the spring elements (15) which are disposed in the region of the machine component (7) are held firmly against a flange (27) connected to the machine component (7), the flange (27) having support faces and stop faces (45) for said regions (44) of the main spring parts (16) and said regions (44) being held between clamping elements (48) and the flange (27) with the aid of screws (47).

12. Device according to claim 5, characterized in that the main spring parts (16) in the region of the central axis (2) are disposed between clamping elements (53, 54), said clamping elements (53, 54) at their sides (57, 58) remote from the main spring parts (16) have a central recess, flat strain washers (59, 60) rest against said sides, and said strain washers (59, 60) are elastically deformed by a central screw connection (56) of the machine component.

13. Device according to one of claims 1 to 12, characterized in that in a Stirling free-piston engine at least one of the pistons and/or one of the piston rods forms such a machine component moved in a linearly oscillating manner, and the two associated guides are supported in the housing of said Stirling free-piston engine.

14. Device according to one of claims 1 to 12, characterized in that the machine component moved in a linearly oscillating manner is a piston rod (7) and/or a piston (3, 4) of a compressor (1) with a linearly oscillating drive (8, 9), and the two guides (11, 12) are supported in the housing (10) of said compressor (1).

## Revendications

1. Dispositif de guidage et de centrage d'un élément de machine (4, 7), qui exécute des mouvements linéaires oscillants suivant la direction de son axe central (2), l'élément de machine (4, 7) étant supporté dans un boîtier (10) sur deux guidages (11, 12) agencés à distance l'un de l'autre dans la direction de l'axe central (2), caractérisé en ce que chacun des deux guidages (11, 12) est constitué de plusieurs éléments de ressort (15) en forme de plaques, qui sont disposés dans un plan (13, 14) s'étendant approximativement perpendiculairement à l'axe central (2) de l'élément de machine (4, 7), en ce que chacun des éléments de ressort (15) est relié d'une manière fixe, d'une part, à l'élément de machine (4, 7) dans la zone de l'axe central (2) et, d'autre part, au boîtier (10) dans la zone des extrémités extérieures des éléments de ressort (15), en ce que chacun des éléments de ressort (15) comporte au moins une longue pièce de ressort principal (16), qui est située dans le plan (13, 14) perpendiculairement à l'axe central (2), et, à chaque extrémité dirigée vers le boîtier (10), au moins une courte pièce de ressort auxiliaire (17), qui est agencée approximativement parallèlement à l'axe central (2), en ce qu'un élément de liaison (18) est disposé entre chaque pièce de ressort auxiliaire (17) et la pièce de ressort principal (16) correspondante et en ce que les pièces de ressort auxiliaire (17) sont reliées de manière rigide aux extrémités extérieures (24, 25) des pièces de ressort principal (16) par l'intermédiaire de ces éléments de liaison (18).

2. Dispositif suivant la revendication 1, caractérisé en ce que chacun des deux guidages (11, 12) comporte au moins deux éléments de ressort (15) symétriques par rapport au centre, qui sont agencés dans un plan (13, 14) perpendiculairement à l'axe central (2) de l'élément de machine (3, 4, 7) et qui coupent radialement cet axe central (2), des angles identiquement grands étant chaque fois formés entre les éléments de ressort (15).

3. Dispositif suivant l'une des revendications 1 et 2, caractérisé en ce que la rigidité du dispositif de guidage formé par les deux guidages (11, 12) est, transversalement à l'axe central (2), plus grande d'au moins le facteur 100 que suivant la direction de l'axe central (2).

4. Dispositif suivant l'une des revendications 1 à 3, caractérisé en ce qu'au moins un des guidages (11, 12) présente deux plans (14, 40) avec des éléments de ressort (15), ces plans (14, 40) s'étendant parallèlement et à distance l'un de l'autre le long de l'axe central (2) ainsi que perpendiculairement à l'axe central (2).

5. Dispositif suivant l'une des revendications 1 à 4, caractérisé en ce que chaque élément de ressort (15) est constitué d'une pièce de ressort principal d'une pièce (16) avec des éléments de liaison centraux (51) vis-à-vis de l'élément de machine (7, 52) et chaque fois au moins une pièce de ressort auxiliaire (17) agencée aux deux extrémités de la pièce de ressort principal (16).

6. Dispositif suivant l'une des revendications 1 à 4, caractérisé en ce que chaque élément de ressort (15) est constitué d'une pièce de ressort principal en deux pièces (16), les extrémités intérieures (44), dirigées vers l'axe central, des deux pièces de ressort principal (16', 16") étant reliées de manière fixe à l'élément de machine (7, 27) et en ce qu'au moins une pièce de ressort auxiliaire (17) est agencée à chacune des extrémités extérieures (24) des deux pièces de ressort principal (16).

7. Dispositif suivant l'une des revendications 1 à 4, caractérisé en ce que chacun des éléments de ressort (15) est constitué d'une pièce de ressort principal (16) en une ou plusieurs pièces et de chaque fois deux paires de pièces de ressort auxiliaire (17) qui s'étendent parallèlement.

8. Dispositif suivant l'une des revendications 1 à 4, caractérisé en ce que chacun des éléments de ressort (15) est constitué d'une paire de pièces de ressort principal (16) en une ou plusieurs pièces, qui sont agencées parallèlement, et de chaque fois deux paires de pièces de ressort auxiliaire (17) qui s'étendent parallèlement.

9. Dispositif suivant l'une des revendications 1 à 8, caractérisé en ce que l'élément de liaison (18) agencé entre la pièce de ressort principal (16) et chaque pièce de ressort auxiliaire (17) des éléments de ressort (15) est un élément angulaire et en ce que cet élément angulaire présente des surfaces de positionnement (30, 31) et des dispositifs de serrage (32, 33) pour le support par une liaison due à une force de chaque fois une des zones d'extrémité des pièces de ressort principal et auxiliaire (16, 17).

10. Dispositif suivant la revendication 9, caractérisé en ce que l'élément angulaire comporte une partie de positionnement (36) présentant des surfaces d'appui et de butée (30, 31) agencées perpendiculairement l'une à l'autre ainsi que des plaques de pressage (32, 33), en ce que les zones d'extrémité des pièces de ressort principal et auxiliaire (16, 17) sont insérées entre respectivement une plaque de pressage (32, 33) et une surface d'appui (30, 31) sur la partie de positionnement (36) et en ce qu'il y a, pour le support par une liaison due à une force des zones d'extrémité des pièces de ressort (16, 17), des vis ou des rivets (34) entre la partie de positionnement (36) et les plaques de pressage (32, 33).

11. Dispositif suivant l'une des revendications 1 à 10, caractérisé en ce que les zones (44) des pièces de ressort principal (16) des éléments de ressort (15), qui sont agencées dans les zones de l'élément de machine (7), sont fixées sur une bride (27) reliée à l'élément de machine (7), la bride (27) présentant des surfaces d'appui et des surfaces de butée (45) pour ces zones (44) des pièces de ressort principal (16) et ces zones (44) étant maintenues entre des éléments de serrage (48) et la bride (27) à l'aide de vis (47).

12. Dispositif suivant la revendication 5, caractérisé en ce que les pièces de ressort principal (16) sont agencées dans la zone de l'axe central (2) entre des éléments de serrage (53, 54), en ce que ces éléments de serrage (53, 54) présentent un évidement central sur la face (57, 58) tournée à l'opposé des pièces de ressort principal (16), en ce que des rondelles de serrage planes (59, 60) reposent sur ces faces et en ce que ces rondelles de serrage (59, 60) peuvent être fléchies élastiquement par un vissage central (56) de l'élément de machine.

13. Dispositif suivant l'une des revendications 1 à 12, caractérisé en ce que, sur un moteur à pistons libres Stirling, au moins un des pistons et/ou une des tiges de piston forment un élément de machine déplacé de manière oscillante et linéaire de ce type et en ce que les deux guidages correspondants sont soutenus dans le boîtier de ce moteur à pistons libres Stirling.

14. Dispositif suivant l'une des revendications 1 à 12, caractérisé en ce que l'élément de machine déplacé de manière oscillante et linéaire est une tige de piston (7) et/ou un piston (3, 4) d'un compresseur (1) avec un organe d'entraînement (8, 9) oscillant, linéaire, et en ce que les deux guidages (11, 12) sont soutenus dans le boîtier (10) de ce compresseur (1).
